(19) Europäisches Patentamt
European Patent Office
Office européen des brevets

(11) **EP 1 358 229 B1**

(12) **FASCICULE DE BREVET EUROPEEN**

(45) Date de publication et mention
de la délivrance du brevet:
**16.04.2008 Bulletin 2008/16**

(51) Int Cl.:
***C08F 136/08*** *(2006.01)*     ***C08F 136/04*** *(2006.01)*
***C08F 4/54*** *(2006.01)*

(21) Numéro de dépôt: **01993634.3**

(22) Date de dépôt: **29.10.2001**

(86) Numéro de dépôt international:
**PCT/EP2001/012489**

(87) Numéro de publication internationale:
**WO 2002/038635 (16.05.2002 Gazette 2002/20)**

(54) **POLYISOPRENES DE SYNTHESE ET LEUR PROCEDE DE PREPARATION**

SYNTHETISCHE POLYISOPRENE UND VERFAHREN ZU IHRER HERSTELLUNG

SYNTHETIC POLYISOPRENES AND THEIR PREPARATION METHOD

(84) Etats contractants désignés:
**AT BE CH CY DE DK ES FI FR GB GR IE IT LI LU
MC NL PT SE TR**

(30) Priorité: **13.11.2000 FR 0014677**

(43) Date de publication de la demande:
**05.11.2003 Bulletin 2003/45**

(73) Titulaires:
• **Société de Technologie Michelin
63000 Clermont-Ferrand Cedex 09 (FR)**
• **Michelin Recherche et Technique S.A.
1763 Granges-Paccot (CH)**

(72) Inventeur: **LAUBRY, Philippe
Greer, DSC 29650 (US)**

(74) Mandataire: **Bolinches, Michel Jean-Marie
M.F.P.
Michelin
SGD/LG/PI - F35 - Ladoux
F-63040 Clermont-Ferrand Cedex 09 (FR)**

(56) Documents cités:
**EP-A- 0 304 088        EP-A- 0 846 707
US-A- 3 864 278        US-A- 4 128 708**

**Description**

La présente invention concerne des polyisoprènes de synthèse présentant un taux élevé d'enchaînements cis-1,4 et leur procédé de préparation.

Pour la préparation de polyisoprènes présentant un taux élevé d'enchaînements cis-1,4, il est connu d'utiliser des systèmes catalytiques à base :

- d'un sel de terre rare en solution dans un solvant hydrocarboné,
- d'un agent d'alkylation de ce sel constitué d'un alkylaluminium, et
- d'un halogénure d'un alkylaluminium.

Il est par exemple connu, d'après le document « Compte-rendu de l'Académie des Sciences d'U. R. S. S., tome 234, n°5, 1977 (Y. B. Monakov, Y. R. Bieshev, A. A. Berg, S. R. Rafikov) » d'utiliser, pour la polymérisation de l'isoprène à une température comprise entre 20° C et 50° C, un système catalytique comprenant:

- un sel de néodyme ou de praséodyme de l'acide bis(2-éthylhexyl)phosphorique, à titre de sel de terre rare, en solution dans du toluène,
- du triisobutylaluminium à titre d'agent d'alkylation, selon un rapport molaire (agent d'alkylation / sel de terre rare) égal à 20, et
- du chlorure de diéthylaluminium à titre d'halogénure d'un alkylaluminium.

On peut également citer le document « Proceedings of China - U. S. Bilateral Symposium on Polymer Chemistry and Physics, Science Press, pp. 382-398, 1981 (O. Jun, W. Fosong, S. Zhiquan) ». Ce document enseigne notamment l'utilisation d'un sel de néodyme de l'acide bis(2-éthylhexyl)phosphorique, en association avec du triéthylaluminium ou du triisobutylaluminium, et un halogénure d'alkylaluminium de formule $Al_2(C_2H_5)_3Cl_3$.

Les polyisoprènes qui sont obtenus au moyen d'un tel système catalytique présentent des taux d'enchaînements cis-1,4 variant de 94,2 % à 94,7 % (tableaux 4 et 6, pp. 386 et 387).

Ce document mentionne également l'utilisation de systèmes catalytiques à base de :

- naphténate de terre rare, les taux d'enchaînements cis-1,4 des polyisoprènes correspondants étant compris entre 93,6 % et 96,0 % ; et à base de
- trichlorure de terre rare (système catalytique de formule $LnCl_3 - C_2H_5OH - Al(C_2H_5)_3$), les taux d'enchaînements cis-1,4 des polyisoprènes correspondants étant compris entre 94,1 % et 98,0 % (ce taux de 98 % étant atteint en utilisant de l'Ytterbium à titre de terre rare, voir tableau 12 p. 391).

Dans la majorité des cas, la détermination de la microstructure est effectuée par la technique de dosage par moyen infrarouge (MIR en abrégé), selon la méthode mise au point par Ciampelli et Al (F. Ciampelli, D. Moreno, M. Cambini, Makromol. Chem., 1963, 61, 250-253). On notera que cette méthode, basée uniquement sur des calculs réalisés dans le domaine infrarouge, ne procure pas toujours des résultats d'une précision satisfaisante lorsqu'elle est utilisée isolément.

Le document de brevet américain US-A-5 859 156 décrit un procédé de préparation de polyisoprènes au moyen d'un système catalytique à base de tétrachlorure de titane, d'un organoaluminium et d'un éther. Le taux maximal d'enchaînements cis-1,4 des polyisoprènes ainsi obtenus, mesuré par résonance magnétique nucléaire du carbone 13 (RMN[13]C), est de 98,0 % (voir exemple 2, colonne 27, les taux d'enchaînements trans-1,4 et 3,4 étant alors de 1,0 % chacun).

Le but de la présente invention est de proposer de nouveaux polyisoprènes de synthèse et leur procédé de préparation, lesdits polyisoprènes présentant des taux d'enchaînements cis-1,4 qui sont nettement supérieurs à ceux obtenus à ce jour.

La demanderesse a découvert d'une manière inattendue qu'un système catalytique de type « préformé » à base d'au moins:

- un monomère diène conjugué,
- un sel d'un ou de plusieurs métaux de terre rare (métaux ayant un numéro atomique compris entre 57 et 71 dans le tableau périodique des éléments de Mendeleev) d'un acide phosphorique organique, ledit sel étant en suspension dans au moins un solvant hydrocarboné inerte, saturé et de type aliphatique ou alicyclique,
- un agent d'alkylation constitué d'un alkylaluminium de formule $AlR_3$ ou $HAlR_2$ , le rapport molaire (agent d'alkylation / sel de terre rare) présentant une valeur allant de 1 à 5, et
- un donneur d'halogène constitué d'un halogénure d'alkylaluminium,

permet de polymériser l'isoprène avec une activité satisfaisante à des températures de polymérisation qui sont inférieures ou égales à 5° C, et d'obtenir à ces basses températures des polyisoprènes dont les taux d'enchaînements cis-1,4, mesurés à la fois selon la technique de résonance magnétique nucléaire du carbone 13 et selon la technique de dosage par moyen infrarouge, sont strictement supérieurs à 99,0 %.

Ce système catalytique selon l'invention permet par exemple d'obtenir des polyisoprènes qui sont tels que lesdits taux d'enchaînements cis-1, 4, mesurés par l'une et l'autre de ces techniques, peuvent être compris entre 99,0 % et 99,6 %, en incluant 99,6 %.

On notera que les polymérisations peuvent être mises en oeuvre dans un solvant hydrocarboné inerte, ou bien en masse, c'est-à-dire sans solvant.

Avantageusement, ce système catalytique permet, à des températures de polymérisation allant de -55° C à -20° C, d'obtenir des polyisoprènes dont les taux d'enchaînements cis-1,4, mesurés par l'une et l'autre des techniques précitées, sont égaux ou supérieurs à 99,3 %, et appartiennent par exemple à un domaine allant de 99,3 % à 99,6 %.

A titre encore plus avantageux, ce système catalytique permet, à des températures de polymérisation allant de -55° C à -40° C, d'obtenir des polyisoprènes dont les taux d'enchaînements cis-1,4, également mesurés par l'une et l'autre des techniques précitées, sont égaux ou supérieurs à 99,5 %, et sont par exemple égaux à 99,6 %.

On notera que ces valeurs de taux d'enchaînements cis-1,4 qui sont très proches de la valeur de 100 % qui caractérise le caoutchouc naturel, n'ont jamais été réellement atteintes à ce jour. Le domaine de taux d'enchaînements cis-1,4 mesuré selon la présente invention tient compte de mesures établies au moyen, d'une part, de la technique de dosage par moyen infrarouge après un calibrage des échantillons de polyisoprène réalisé dans le cadre de l'analyse RMN$^{13}$C et, d'autre part, de l'analyse RMN$^{13}$C, les mesures obtenues par l'une de ces techniques étant confirmées par l'autre (à l'incertitude de mesure près de plus ou moins 0,1 %, qui est inhérente à chacune de ces deux techniques). La précision de ces valeurs de taux d'enchaînements cis-1,4 est ainsi notablement accrue, par rapport à celle des valeurs de taux qui ont été mentionnées dans l'état de la technique à ce jour.

En particulier, l'analyse par RMN$^{13}$C a mis en évidence l'absence totale d'enchaînements 1,2 et d'enchaînements trans-1,4 dans les échantillons de polyisoprène selon l'invention.

On notera en outre que le taux particulièrement élevé d'enchaînements cis-1,4 obtenu pour les polyisoprènes selon l'invention est indépendant de la quantité de système catalytique utilisée.

On notera par ailleurs que les polyisoprènes ainsi obtenus présentent une viscosité élevée.

Concernant les systèmes catalytiques selon l'invention, on notera qu'ils sont caractérisés par des rapports molaires (agent d'alkylation / sel de terre rare) compris entre 1 et 5 ce qui, d'une manière surprenante, est extrêmement réduit par rapport aux rapports molaires égaux ou supérieurs à 20 qui ont été utilisés à ce jour pour polymériser l'isoprène.

A titre de monomère diène conjugué utilisable pour «préformer» le système catalytique selon l'invention, on peut citer le 1, 3-butadiène, à titre préférentiel.

On peut également citer le 2-méthyl 1, 3-butadiène (ou isoprène), les 2, 3-di (alcoyle en C1 à C5) 1, 3-butadiène tels que par exemple le 2, 3 diméthyl-1, 3-butadiène, le 2, 3-diéthyl-1, 3-butadiène, le 2-méthyl 3-éthyl 1, 3-butadiène, le 2-méthyl 3-isopropyl 1, 3-butadiène, le phényl 1, 3-butadiène, le 1, 3-pentadiène, le 2, 4-hexadiène, ou tout autre diène conjugué ayant entre 4 et 8 atomes de carbone.

On notera que le rapport molaire (monomère / sel de terre rare) peut présenter une valeur allant de 25 à 50.

Selon une autre caractéristique de l'invention, ledit sel de terre rare est constitué d'une poudre non hygroscopique ayant une légère tendance à s'agglomérer à la température ambiante.

- Selon un mode préférentiel de réalisation de l'invention, le solvant hydrocarboné inerte dans lequel ledit sel de terre rare est en suspension est un solvant aliphatique ou alicyclique de bas poids moléculaire, tel que le cyclohexane, le méthylcyclohexane, le n-heptane, ou un mélange de ces solvants.

- Selon un autre mode de réalisation de l'invention, le solvant utilisé pour la suspension du sel de terre rare est un mélange d'un solvant aliphatique de haut poids moléculaire comprenant une huile paraffinique, par exemple de l'huile de vaseline, et d'un solvant de bas poids moléculaire tel que ceux susmentionnés (par exemple le méthylcyclohexane).

On réalise cette suspension en procédant à un broyage dispersif du sel de terre rare dans cette huile paraffinique, de sorte à obtenir une suspension très fine et homogène dudit sel.

Selon une autre caractéristique de l'invention, ledit système catalytique comprend le métal de terre rare selon une concentration égale ou sensiblement égale à 0,02 mol/l.

Selon un exemple préférentiel de réalisation de l'invention, on utilise à titre de sel un tris[bis(2-éthylhexyl) phosphate] dudit ou desdits métaux de terre rare.

A titre encore plus préférentiel, ledit sel de terre rare est le tris[bis(2-éthylhexyl)phosphate] de néodyme.

A titre d'agent d'alkylation utilisable dans le système catalytique selon l'invention, on peut citer des alkylaluminiums tels que:

- des trialkylaluminiums, par exemple le triisobutylaluminium, ou
- des hydrures de dialkylaluminium, par exemple l'hydrure de diisobutylaluminium.

On notera que cet agent d'alkylation est de préférence constitué de l'hydrure de diisobutylaluminium (appelé HDiBA dans la suite de la présente description).

A titre de donneur d'halogène utilisable dans le système catalytique selon l'invention, on peut citer des halogénures d'alkylaluminium, de préférence le chlorure de diéthylaluminium (appelé CDEA dans la suite de la présente description).

On notera que le rapport molaire (donneur d'halogène / sel de terre rare) peut présenter une valeur allant de 2,6 à 3.

Selon l'invention, le procédé de préparation dudit système catalytique consiste:

- dans une première étape, à réaliser une suspension dudit sel de terre rare dans ledit solvant,
- dans une seconde étape, à ajouter à la suspension ledit monomère diène conjugué,
- dans une troisième étape, à ajouter ledit agent d'alkylation à la suspension comprenant ledit monomère pour l'obtention d'un sel alkylé, et
- dans une quatrième étape, à ajouter ledit donneur d'halogène au sel akylé.

Les caractéristiques précitées de la présente invention, ainsi que d'autres, seront mieux comprises à la lecture de la description suivante de plusieurs exemples de réalisation de l'invention, donnés à titre illustratif et non limitatif.

## I. PREPARATION DE SYSTEMES CATALYTIQUES SELON L'INVENTION:

### 1) Synthèse d'un sel de phosphate organique de néodyme selon l'invention :

On a réalisé une pluralité d'essais pour la synthèse de ce sel. On a utilisé pour chacun de ces essais une même méthode de synthèse, qui est détaillée ci-après.

a) Synthèse d'une solution aqueuse de néodyme $NdCl_3, 6H_2O$ :

Dans un bécher de 600 ml de forme « haute », on pèse 96 g de $Nd_2O_3$ (commercialisé par la société RHODIA), qui a été dosé par complexométrie à 85,3 % en Nd (85,7 % en théorie), soit présentant 0,57 mol de Nd.

On ajoute 80 ml d'eau déminéralisée. Sous une hotte aspirante, avec une agitation magnétique et à température ambiante, on ajoute lentement 150 ml d'HCl concentré à 36 % en poids (d = 1,18), soit 1,75 mol d'HCl (rapport molaire HCl/Nd = 1,75/0,57 = 3,07).

La réaction $Nd_2O_3 + 6\,HCl + 9\,H_2O \rightarrow 2\,NdCl_3, 6H_2O$ est très exothermique.

Lorsque tout l'acide chlorhydrique a été ajouté, on porte la solution à ébullition sous agitation magnétique, pour éliminer l'excès d'acide chlorhydrique. La solution aqueuse de $NdCl_3$ est limpide et de couleur mauve. Il ne reste pas de produit insoluble ($Nd_2O_3$).

On procède ensuite à l'évaporation de cette solution jusqu'à obtenir un volume d'environ 130 ml dans le bécher. La solution de $NdCl_3, 6H_2O$ est alors très concentrée (elle cristallise à température ambiante).

Puis on verse dans un bidon de 10 litres contenant 4500 ml d'eau déminéralisée la solution concentrée de $NdCl_3$ sous agitation et à température ambiante (en utilisant un moteur avec agitateur en forme d'ancre).

Le pH de la solution, mesuré à 25° C, est voisin de 4.

Puis on ajoute à la solution 1500 ml d'acétone technique. Il ne reste pas de produit insoluble, et la solution ainsi obtenue est de couleur rose.

b) Synthèse d'un phosphate organique de sodium de formule $[RO]_2P(O)ONa$ (R=2-éthylhexyl):

Dans un bécher de 5 litres contenant 1500 ml d'eau déminéralisée, on dissout 68 g de NaOH en pastilles, soit 1,70 mol. Dans un autre bécher de 3 litres contenant 500 ml d'acétone, on dissout 554 g d'un acide phosphorique organique (l'acide bis(2-éthylhexyl) phosphorique, répertorié dans l'ouvrage « Aldrich » sous la référence 23,782-5), soit 1,72 mol de cet acide. Le rapport molaire NaOH / acide phosphorique organique est de 1,70 /1,72, soit 0,99.

A température ambiante et en agitant à la main à l'aide d'un agitateur en verre, on verse la solution dudit acide phosphorique organique dans la solution de NaOH. La réaction est la suivante :

$$[RO]_2P(O)OH + NaOH \rightarrow [RO]_2P(O)ONa + H_2O.$$

Elle est légèrement exothermique, et l'on obtient une solution homogène de couleur jaunâtre. Le pH de la solution, mesuré à 25° C, est voisin de 7.

c) Synthèse d'un sel phosphaté de néodyme de formule $[[RO]_2P(O)O]_3Nd$:

- On verse sous vive agitation (moteur avec agitateur en forme d'ancre) et à température ambiante la solution de phosphate organique de Na obtenue au paragraphe b) ci-dessus dans la solution aqueuse de $NdCl_3,6H_2O$ obtenue au paragraphe a) ci-dessus.

Il se forme immédiatement un précipité blanc très fin. On maintient le mélange obtenu sous agitation pendant 30 minutes, après l'addition de tout le phosphate organique de Na (selon un rapport molaire $(RO)_2P(O)ONa/NdCl_3$ = 1,70/0,57 = 2,98). La réaction est la suivante :

$$3 [RO]_2P(O)ONa + NdCl_3,6H_2O \rightarrow Nd[OP(O)[OR]_2]_3 + 3 NaCl + 6 H_2O.$$

On récupère et on lave le sel phosphaté de néodyme ainsi obtenu dans une centrifugeuse équipée d'une "chaussette".

Le pH des eaux « mères » est compris entre 3 et 4 à 25° C. Ces eaux « mères » sont incolores et limpides.

On scinde en deux échantillons le sel obtenu, puis on lave chaque échantillon avec un mélange acétone/ eau déminéralisée en réalisant trois fois le cycle de lavage décrit ci-dessous, afin d'éliminer tous les chlorures.

Chaque cycle de lavage est réalisé dans un seau de 10 litres en matière plastique contenant initialement 2 litres d'acétone. On procède à l'homogénéisation de chaque échantillon et de l'acétone au moyen d'un homogénéiseur « Ultra-Turrax » pendant environ 1 minute, afin d'obtenir une solution de type lait.

On ajoute ensuite 4 litres d'eau déminéralisée dans le seau, puis on homogénéise le mélange obtenu au moyen du même homogénéiseur pendant 3 minutes.

On procède à la centrifugation du mélange ainsi obtenu puis on récupère le sel phosphaté de néodyme dans la "chaussette".

Sur la dernière eau de lavage, le test analytique qualitatif des chlorures est quasi-négatif (la réaction est: NaCl + $AgNO_3$ (milieu $HNO_3$) $\rightarrow$ AgCl$\downarrow$ + $NaNO_3$).

On sèche le sel de néodyme ainsi lavé dans une étuve à 60° C, sous vide et avec courant d'air pendant environ 80 heures.

Le rendement final pour chacun des essais de synthèse réalisés est compris entre 95 % et 98 %, suivant les pertes dues aux lavages. On obtient à chaque fois environ 600 g de sel phosphaté de néodyme à l'état sec.

Les teneurs massiques en néodyme, déterminées par.complexométrie, sont comprises entre 12,9 % et 13,0 % (pour un taux théorique = [144,24 / 1108,50] x 100 = 13,01 %, avec 144,24 g/mol = masse molaire du néodyme).

**2) Synthèse de systèmes catalytiques « préformés » selon l'invention:**

a) Composition des systèmes catalytiques selon l'invention:

Chacun de ces systèmes comprend un sel phosphaté de néodyme tel que synthétisé selon le paragraphe 1) ci-dessus, qui est en suspension dans un solvant hydrocarboné inerte de bas poids moléculaire (constitué de cyclohexane, « CH » en abrégé ci-après ou de méthylcyclohexane, « MCH » en abrégé ci-après).

Ces systèmes catalytiques sont caractérisés par les rapports molaires relatifs suivants, par rapport au sel de néodyme :

Sel de Nd / butadiène (Bd ci-après) / HDiBA / CDEA = 1 /50/1,8 à 4/2,6 ou 3.

b) Procédé de synthèse de ces systèmes catalytiques:

- Première étape :

En vue de l'obtention de ces systèmes catalytiques, on verse 15,6 g du sel de néodyme, à l'état de poudre, dans un réacteur de 1 litre préalablement nettoyé de ses impuretés. On soumet ensuite ce sel à un barbotage à l'azote par le fond du réacteur, pendant une durée de 15 min.

- <u>Seconde étape</u> :

On introduit 90 % (fraction massique) du solvant mentionné au paragraphe a) ci-dessus dans le réacteur contenant le sel de néodyme.

Lorsque le solvant utilisé est le cyclohexane, la durée de mise en contact du sel de néodyme avec ce solvant varie de 2 heures à 4 heures, et la température de mise en contact varie de 30° C à 60° C. Lorsque le solvant utilisé est le méthylcyclohexane, la durée de mise en contact du sel de néodyme avec ce solvant est de 30 min., et la température de mise en contact est de 30° C.

- <u>Troisième étape</u> :

On introduit ensuite du butadiène dans le réacteur (selon le rapport molaire sel /butadiène de 1/ 50 mentionné au paragraphe a) ci-dessus), à une température de 30° C, en vue de la « préformation » de chaque système catalytique.

- <u>Quatrième étape</u> :

On introduit ensuite dans le réacteur de l'hydrure de diisobutylaluminium (HDiBA) à titre d'agent d'alkylation du sel de néodyme, selon une concentration d'environ M, ainsi qu'une quantité du solvant précité à la seconde étape correspondant à une fraction massique de 5 % de la totalité dudit solvant. La durée de l'alkylation est de 15 min. et la température de la réaction d'alkylation est de 30° C.

- <u>Cinquième étape</u> :

On introduit ensuite dans le réacteur du chlorure de diéthylaluminium (CDEA) à titre de donneur d'halogène, selon une concentration d'environ 1 M, ainsi qu'une quantité du solvant précité à la seconde étape correspondant à la fraction massique restante de 5 % de la totalité dudit solvant. La température du milieu réactionnel est portée à 60° C.

- <u>Sixième étape</u> :

On procède ensuite à une « préformation » (ou vieillissement) du mélange ainsi obtenu en maintenant cette température de 60° C pendant une durée variant de 2 heures à 4 heures.

- <u>Septième étape</u> :

On obtient ainsi environ 700 ml d'une solution de système catalytique. On procède à la vidange du réacteur et l'on transfère cette solution dans une bouteille "Steinie" de 750 ml, préalablement lavée, séchée et soumise à un barbotage à l'azote.

On stocke finalement la solution catalytique sous atmosphère d'azote dans un congélateur, à la température de -15° C.

<u>Tableau récapitulatif des systèmes catalytiques préparés</u> :

| Systèmes catalytiques | Solvatation (solvant / durée /T) | Bd/ Nd (mol) | Al/Nd (mol) | Alkylation Durée / T | Cl/Nd (mol) | Préformation Avec CDEA Durée /T |
|---|---|---|---|---|---|---|
| Système 1 | CH 2 h,30°C | 50 | 4 | 15 min. / 30°C | 3 | 4h,60°C |
| Système 2 | CH 4 h, 60° C | 50 | 3 | 15min./30°C | 3 | 2h,60°C |
| Système 3 | MCH 30 min., 30° C | 50 | 3 | 15 min. / 30° C | 3 | 4 h, 60° C |
| Système 4 | MCH 30 min., 30° C | 50 | 1,8 | 15 min. / 30° C | 3 | 2 h, 60° C |

(suite)

| Systèmes catalytiques | Solvatation (solvant / durée /T) | Bd/ Nd (mol) | Al/Nd (mol) | Alkylation Durée / T | Cl/Nd (mol) | Préformation Avec CDEA Durée /T |
|---|---|---|---|---|---|---|
| Système 5 | MCH 30 min., 30° C | 50 | 1,8 | 15 min. / 30° C | 2,6 | 2 h, 60° C |
| Système 6 | CH 2h, 60° C | 50 | 4 | 15 min. / 30° C | 3 | 2 h, 60° C |

**II. Polymérisation de l'isoprène au moyen des systèmes catalytiques précités :**

**1) Exemples de polymérisation de l'isoprène à une température de -15° C Au moyen du système catalytique 1 précité:**

a) Procédé de polymérisation utilisé :

On a utilisé, à titre de réacteur de polymérisation, une bouteille "Steinie" de 250 ml. On a réalisé chaque réaction de polymérisation, soit dans des conditions statiques dans un congélateur (bouteille placée dans un bain de glycol), soit d'une manière dynamique (par agitation de la bouteille dans un bac à glycol).

On a utilisé une coupe de vapocraquage de naphta en C5, dans le but d'en extraire de l'isoprène présentant une pureté proche de 100 %. A cet effet, on a procédé à une purification classique en laboratoire, consistant successivement en :

- une distillation de cette coupe C5 sur de l'anhydride maléique pour éliminer le cyclopentadiène résiduel, suivie
- d'un passage sur une colonne d'alumine pour éliminer les impuretés polaires, et
- d'un barbotage à l'azote pendant 20 min., juste avant la réaction de polymérisation.

On a déterminé, par la technique de chromatographie en phase gazeuse (CPG), la fraction massique de l'isoprène extrait de cette coupe C5, qui est de 99,2 %.

On a mis en oeuvre chaque réaction de polymérisation de l'isoprène (10 g par bouteille) dans le cyclohexane à -15° C, sous atmosphère inerte d'azote, avec un rapport massique Solvant/Monomère (S/M) égal à 9.

On a fait varier dans les divers exemples de polymérisation la base catalytique en néodyme de 150 $\mu$mol à 500 $\mu$mol pour 100 g de monomère (quantité de néodyme exprimée en $\mu$Mcm ci-après). L'étanchéité de la bouteille est assurée par un ensemble de type "joint-capsule percée" permettant l'injection du système catalytique au moyen d'une seringue.

En fin de polymérisation, tout en ajoutant 100 ml de solvant supplémentaire pour fluidifier le milieu, on ajoute de l'acétylacétone (1 ml d'une solution de concentration 1M dans le cyclohexane) pour stopper la réaction et de la N-1,3-diméthylbutyl-N'-phényl-p-phénylènediamine (6PPD en abrégé) comme agent de protection (selon un volume de 2 ml à une concentration de 10 g/l dans le cyclohexane, soit une masse de 0,02 g).

On extrait ensuite le polyisoprène de chaque solution polymérique ainsi obtenue par stripping à la vapeur d'eau pendant 30 min., en présence de tamolate de calcium (on utilise 2 ml de tamol et 50 ml de $CaCl_2$ à 30 g/l). On sèche ensuite pendant environ 18 heures chaque solution extraite dans une étuve à 50° C sous vide (à une pression de 200 mm Hg), avec un léger courant d'azote pendant environ 72 heures.

b) Résultats obtenus :

La mesure du taux de conversion de l'isoprène en polyisoprène en fonction du temps de réaction est utilisée pour décrire la cinétique de polymérisation.

La viscosité inhérente $\eta_{inh}$ à 0,1 g/dl dans le toluène et la viscosité Mooney ML(1+4) (mesurée selon la norme ASTM D-1646), caractérisent la macrostructure de chaque polyisoprène obtenu.

Pour déterminer la microstructure des polyisoprènes, on a utilisé la technique d'analyse RMN[13]C (méthode absolue d'une grande précision) et MIR (moyen infrarouge), comme cela est détaillé à l'annexe 1 jointe. Ces techniques ont permis d'établir, à l'incertitude de 0,1 % près, les taux d'enchaînements cis-1,4 et 3,4 (l'analyse RMN[13]C ayant mis en évidence l'absence d'enchaînements trans-1,4 ou 1,2).

On notera que la seconde technique MIR est d'une grande précision pour la détermination du taux de motifs 3,4, du fait qu'elle utilise les échantillons de polyisoprène ayant été préalablement étalonnés pour l'analyse RMN[13]C.

Le tableau 1 ci-après détaille les conditions opératoires suivies pour chaque polymérisation et les caractéristiques macrostructurales et microstructurales de chaque polyisoprène obtenu.

TABLEAU 1 :

| Essais | Conditions de polymérisation | | | | Caractéristiques des polyisoprènes | | | |
|---|---|---|---|---|---|---|---|---|
| | type de réacteur | Quantité de Nd ($\mu$Mcm) | Temps de réaction (heures) | Taux de conversion (%) | Viscosité inhérente (dl/g) | ML(1+4) | **Taux de cis-1,4 par RMN[13]C** | **Taux de cis-1,4 par MIR** |
| A | Statique | 500 | 64 | 100 | 4,9 | 79 | **99,2** | **99,1** |
| | | 400 | 64 | 100 | 5,3 | 87 | **-** | **-** |
| B | Statique | 400 | 64 | 100 | 5,2 | 82 | **-** | **-** |
| | agité | 400 | 64 | 100 | - | 83 | **-** | **-** |
| C | Statique | 300 | 64 | 100 | 6,0 | 93 | **99,1** | **99,0** |
| D | Statique | 200 | 64 | 100 | 7,2 | - | **99,2** | **-** |
| | | 150 | 64 | 100 | 8,5 | - | **99,2** | **-** |
| E | Statique | 150 | 64 | 100 | 8,6 | - | **-** | **-** |
| | agité | 150 | 64 | 100 | 8,9 | - | **-** | **-** |
| F | Statique | 150 | 64 | 100 | - | - | **-** | **99,1** |
| | | | 47 | 98 | 8,0 | - | **-** | **99,2** |
| | | | 38 | 94 | - | - | **-** | **99,1** |
| | | | 22 | 60 | 7,4 | - | **-** | **99,2** |
| | | | 14 | 42 | 6,8 | - | **-** | **99,2** |

Ce tableau 1 montre que le système catalytique 1 selon l'invention permet d'obtenir avec une activité satisfaisante, à une température de polymérisation maintenue à -15° C, des polyisoprènes à taux de cis appartenant à un domaine allant de 99,0 % à 99,2 %, quelle que soit la quantité de base catalytique utilisée et quel que soit le taux de conversion atteint pour une quantité de base catalytique donnée.

Concernant la macrostructure des polyisoprènes obtenus, ces résultats montrent que l'agitation n'a pas d'influence sur le produit final. Bien que les vitesses de réaction soient relativement réduites, l'activité du système catalytique 1 n'est pas affectée et permet d'atteindre 100 % de conversion, même pour des polyisoprènes finaux présentant une viscosité élevée.

## 2) Exemples de polymérisation de l'isoprène à une température de -25° C Au moyen des systèmes catalytiques 2, 3, 4 et 5 précités:

a) Procédé de polymérisation utilisé :

On a utilisé, à titre de réacteur de polymérisation, une bouteille "Steinie" de 750 ml, et l'on a mis en oeuvre toutes les réactions de polymérisation de l'isoprène en statique dans un congélateur à -25° C (bouteille dans un bain de glycol).

La qualité de l'isoprène est celle décrite au paragraphe 1) ci-dessus. Le taux de conversion est de 100 % dans tous les cas (pour au moins 64 heures de temps de réaction).

On a réalisé chaque polymérisation comme indiqué au paragraphe 1), à ceci près que l'on a testé une pluralité de solvants de polymérisation et de rapports massiques solvant/monomère isoprène (S/M ci-après), pour les essais effectués.

En raison de la viscosité des solutions de polyisoprène obtenues, on leur a ajouté du solvant, avant de leur ajouter les agents de stoppage et de protection mentionnés au paragraphe 1).

On a ensuite extrait le polyisoprène de chaque solution de polyisoprène ainsi « fluidifiée », puis on a séché chaque solution extraite, le tout de la manière qui a été décrite au paragraphe 1).

b) Résultats obtenus :

Le tableau 2 ci-après présente les résultats obtenus (on se référera au paragraphe 1) ci-dessus pour les conditions de mesures).

TABLEAU 2:

| Essais | Syst. cat. | Conditions de polymérisation | | | | Polyisoprènes obtenus | | |
|---|---|---|---|---|---|---|---|---|
| | | Solvant De Polymérisat° | Quantité Nd ($\mu$Mcm) | Quantité isoprène (g) | Rapport S/ M | ML(1+4) | Taux de cis-1,4 par RMN$^{13}$C | Taux de cis-1,4 par MIR |
| G | 2 | aucun | 500 | 50 | 0 | 52 | - | 99,3 |
| | | | 1000 | 50 | 0 | 35 | - | 99,3 |
| | | n-pentane | 1000 | 50 | 1 | 30 | 99,4 | 99,4 |
| | | cyclopentane | 1000 | 50 | 1 | 40 | - | 99,4 |
| | | CH | 1000 | 50 | 1 | 34 | - | 99,3 |
| | | MCH | 1000 | 50 | 1 | 39 | - | 99,3 |
| H | 3 | MCH | 1000 | 36 | 9 | 69 | - | 99,4 |
| | | | 700 | 36 | 9 | 79 | - | 99,4 |
| I | 3 | MCH | 700 | 72 | 5 | 80 | - | 99,5 |
| J | 3 | MCH | 700 | 72 | 5 | 79 | - | 99,5 |
| K | 3 | MCH | 700 | 72 | 5 | 81 | - | 99,4 |
| L | 3 | MCH | 700 | 72 | 5 | 84 | - | 99,4 |
| | 4 | MCH | 700 | 72 | 5 | 89 | - | 99,4 |
| | 5 | MCH | 700 | 72 | 5 | 97 | - | 99,3 |

Ces résultats montrent que les systèmes catalytiques 2 à 5 selon l'invention permettent d'obtenir avec une activité satisfaisante, à une température maintenue à -25° C, des polyisoprènes à taux d'enchaînements cis-1,4 qui sont en moyenne égaux à 99,4 %.

Dans la mesure où cette température de polymérisation reste constante, la présence ou non de solvant, la nature de ce solvant (aliphatique ou alicyclique) et la quantité de solvant n'ont aucun effet sur les taux d'enchaînements cis-1,4.

Concernant les systèmes catalytiques utilisés, on notera que ces taux d'enchaînements cis-1,4 sont indépendants des rapports molaires HDiBA/Nd et CDEA/Nd.

Concernant les caractéristiques de macrostructure des polyisoprènes obtenus (mesures effectuées au moyen de la technique SEC, voir annexe 2 jointe), le polyisoprène obtenu pour l'essai G (système catalytique 2) avec une quantité de Nd de 500 $\mu$Mcm présente :

- une masse moléculaire moyenne en nombre Mn de 338 475 g/mol, et
- un indice de polymolécularité Ip de 2,389.

Quant au polyisoprène obtenu pour l'essai K (système catalytique 3), il présente :

- une masse moléculaire moyenne en nombre Mn de 423 472 g/mol, et
- un indice de polymolécularité Ip de 2,483.

**3) Exemples de polymérisation de l'isoprène à une température de -45° C Au moyen du système catalytique 3 précité:**

a) Procédé de polymérisation utilisé :

On a utilisé les mêmes conditions de polymérisation que celles détaillées au paragraphe 2) ci-dessus, à ceci près que l'on a maintenu la température de polymérisation à une valeur de -45° C (au lieu de -25° C).

b) Résultats obtenus :

Le tableau 3 ci-après présente les résultats obtenus (on se référera au paragraphe 1) ci-dessus pour les conditions de mesures).

TABLEAU 3 :

| Essai | Syst. Cat. | Conditions de polymérisation | | | | | | Polyisoprènes | |
|-------|------------|---------|---------|---------|---------|---------|---------|---------|---------|
| | | Quantité Nd ($\mu$Mcm) | Quantité isoprène (g) | solvant | Rapport S/M | Temps de réaction (h) | Taux de conversion (%) | Viscosité inhérente (dl/g) | **Taux cis-1,4 par MIR (%)** |
| M | 3 | 700 | 72 | MCH | 5 | 144 | 14 | 6,3 | **99,6** |
| | | 1500 | 72 | MCH | 5 | 144 | 22 | 5,4 | **99,6** |

Ces résultats montrent que le système catalytique 3 selon l'invention présente une activité suffisante pour polymériser l'isoprène à une température maintenue à la valeur constante de -45° C, en dépit de la vitesse de réaction réduite qu'il procure à cette très basse température.
On notera que les polyisoprènes ainsi obtenus présentent chacun un taux d'enchaînements cis-1,4 de 99,6 %, taux extrêmement élevé.

**4) Exemples de polymérisation de l'isoprène à une température de 0° C au moyen des systèmes catalytiques 5 et 6 précités:**

a) Procédé de polymérisation utilisé :

On a utilisé les mêmes conditions de polymérisation que celles détaillées au paragraphe 1) ci-dessus (bouteille « Steinie de 250 ml avec 10 g d'isoprène par bouteille), à ceci près que l'on a maintenu la température de polymérisation à une valeur de 0° C et que la polymérisation a été mise en oeuvre avec agitation dans un bac à glycol.

b) Résultats obtenus :

Le tableau 4 ci-après présente les résultats obtenus (on se référera au paragraphe 1) pour les conditions de mesures).

TABLEAU 4:

| Essais | Syst. Cat. | Conditions de polymérisation | | | | Polyisoprènes obtenus | | | |
|--------|------------|---------|---------|---------|---------|---------|---------|---------|---------|
| | | Rapport S/M | Quantité Nd ($\mu$Mcm) | Temps de réaction (h) | Taux de conversion (%) | Viscosité inhérente (dl/g) | ML (1+4) | **Taux cis-1,4 (%) par RMN[13]C** | **Taux cis-1,4 (%) par MIR** |
| N | 6 | 9 | 130 | 48 | 100 | - | 97 | **99,1** | **-** |
| O | 5 | 9 | 300 | 18 | 100 | 7,6 | 97 | **-** | **99,0** |
| | | | 700 | 18 | 100 | 5,8 | 84 | **-** | **99,1** |
| P | 5 | 9 | 700 | 0,25 | 15 | - | - | **-** | **-** |

(suite)

| Essais | Syst. Cat. | Conditions de polymérisation | | | | Polyisoprènes obtenus | | | |
|--------|-----------|-----------------|-----------------|--------------------|-------------------------|---------------------------|---------------|---------------------------------|------------------------------|
| | | Rapport S/M | Quantité Nd ($\mu$Mcm) | Temps de réaction (h) | Taux de conversion (%) | Viscosité inhérente (dl/g) | ML (1+4) | Taux cis-1,4 (%) par RMN$^{13}$C | Taux cis-1,4 (%) par MIR |
| | | | | 1,5 | 50 | - | - | - | - |
| | | | | 2 | 60 | 4,9 | - | - | 99,1 |
| | | | | 18 | 100 | 6,0 | 86 | - | 99,0 |
| Q | 5 | 9 | 700 | 18 | 100 | - | 85 | - | 99,0 |
| | | 7 | 700 | 18 | 100 | - | 86 | - | 99,0 |

Ces résultats montrent que les systèmes catalytiques 5 et 6 selon l'invention permettent d'obtenir avec une activité satisfaisante, à une température maintenue à 0° C, des polyisoprènes à taux d'enchaînements cis-1,4 qui appartiennent à un domaine allant de 99,0 % à 99,1 %.

Pour un rapport solvant de polymérisation/ monomère (cyclohexane/ isoprène) égal à 9 (soit 10 % en concentration), on notera que les polyisoprènes obtenus avec le système catalytique 5 selon l'invention présentent au bout de 18 heures (100 % de conversion) une viscosité Mooney élevée et reproductible d'environ 85.

Concernant les caractéristiques de macrostructure des polyisoprènes obtenus (mesures effectuées au moyen de la technique SEC, voir annexe 2 jointe), le polyisoprène obtenu pour l'essai N (système catalytique 6) présente :

-    une masse moléculaire moyenne en nombre Mn de 930 299 g/mol, et
-    un indice de polymolécularité Ip de 2,46.

## ANNEXE 1 :

### Détermination de la microstructure des polyisoprènes.

### 1) Par la technique de résonance magnétique nucléaire du carbone 13 (analyse RMN$^{13}$C):

a) Préparation des échantillons:

2 g de polyisoprène sont extraits à l'acétone au reflux pendant 8 heures. Le polyisoprène extrait est ensuite séché à température ambiante et sous vide pendant 24 heures. Puis ce polyisoprène séché est remis en solution dans du chloroforme. La solution de polyisoprène est filtrée et le solvant est éliminé à l'évaporateur rotatif pendant 4 heures (la température du bain est de 40° C).

Pour l'analyse, on solubilise environ 600 mg du polyisoprène ainsi préparé dans du CDCl$_3$ (2 ml), directement dans un tube RMN$^{13}$C.

b) Caractéristiques de l'appareillage:

-    Spectrophotomètre commercialisé sous la dénomination « BRUKER AM250 ».
-    Fréquence de résonance (SFO) = 62,9 MHz.
-    Programme d'impulsion : INVGATE.AU (suppression de l'effet «NOE» pour l'analyse quantitative en RMN du $^{13}$C).
-    Durée d'impulsion : 9$\mu$s (90°).
-    Durée de relaxation : 10 s.
-    Nombre de transitoires accumulés (NS) = 8192.

c) Attribution des pics du spectre:

L'identification des pics a été faite d'après :

Quang Tho Pham, R. Petiaud, H. Waton, M.F. Llauro Darricades, *"Proton and NMR Spectra of Polymers",* **1991**, Penton Press.

d) Méthode d'intégration:

- Pas de motifs 1-2 détectés.
- Le rapport entre les taux de 3-4 et de 1-4 est déterminé à l'aide des carbones éthyléniques. La teneur en enchaînements 1-4 trans et 1-4 cis dans le polyisoprène est calculée avec les carbones aliphatiques.

**2) Par la technique de dosage par moyen infrarouge (MIR):**

a) Préparation des échantillons:

Pour ce dosage infrarouge, on utilise le polyisoprène tel que préparé au paragraphe 1) ci-dessus, pour la RMN (l'échantillon est extrait à l'acétone puis est séché en étuve).
Une solution du polyisoprène à 10 g/l exactement dans le $CCl_4$ est analysée à l'aide d'une cellule de KBr de 0,2 mm d'épaisseur.

b) Appareillage:

- Spectrophotomètre commercialisé sous la dénomination « BRUKER IFS88 ».
- Conditions d'enregistrement:

    ouverture du faisceau : maximale;
    résolution : 2 $cm^{-1}$;
    vitesse du miroir mobile : 0,639 $cm.s^{-1}$;
    détecteur : DTGS ;
    accumulations : 64 scan ;
    temps de purge : 3 mn ;
    fenêtre spectrale : 4000 à 400 $cm^{-1}$;
    spectres enregistrés en transmittance ;
    référence : solvant $CCl_4$.

- Traitement des spectres :

    transfert sur micro-ordinateur ;
    traitement avec le logiciel « OPUS » de « BRUKER ».

c) Attribution des pics du spectre:

Des études spectrales et le contenu des documents suivants ont permis de déterminer les bandes caractéristiques des différents modes d'enchaînement :

- Y. Tanaka, Y. Takeuchi, M. Kobayashi, H. Tadokoro, Journal of Polymer Science, Part A-2, 1971, 9(1), 43-57.
- J.P. Kistel, G. Friedman, B. Kaempf, Bulletin de la Société Chimique de France, 1967, n˚12.
- F. Asssioma, J. Marchal, C. R. Acad. Sc. Paris, Ser C, 1968, 266(22), 1563-6 et Ser D, 1968, 266(6), 369-72.
- T.F. Banigan, A.J. Verbiscar, T.A. Oda, Rubber Chemistry and technology, 1982, 55(2), 407-15.

La conformation 3-4 présente deux bandes caractéristiques :

- une bande à 880 $cm^{-1}$ de forte intensité correspondant aux vibrations de déformation hors du plan ($\delta$ C-H) des hydrogènes terminaux du groupement vinylique (=$CH_2$).
- une bande à 3070 $cm^{-1}$ correspondant aux élongations $\nu$ C-H de ce même groupement (=$CH_2$).

La conformation 1-4 cis possède une bande caractéristique vers 3030 cm$^{-1}$. Cette bande correspond aux vibrations d'élongation ν C-H du groupement =CH.

La bande correspondant aux vibrations de déformation symétrique des groupements méthyles (δ CH$_3$) est une bande complexe qui intègre les trois conformations. L'absorption correspondant aux δ CH$_3$ de la conformation 1-4 trans est maximale vers 1385 cm$^{-1}$; il s'agit d'un épaulement de cette bande.

d) Méthode d'intégration:

Les bandes du 3-4 et du 1-4 cis sont intégrées selon le mode de la surface tangentielle. Le maximum d'absorption du 1-4 trans se situe en épaulement de la bande intense des δ CH$_3$. La méthode la plus adaptée dans ce cas est la mesure de la hauteur de bande avec comme ligne de base la tangente de la bande des δ CH$_3$.

e) Courbes d'étalonnage:

Expression de la loi de Beer-Lambert:

$$Do(\nu\ ou\ \delta) = \varepsilon(\nu\ ou\ \delta)\ e\ c$$

avec:

Do(ν ou δ) = densité optique de la bande ν ou δ ;
ε(ν ou δ) = coefficient d'extinction molaire de l'analyte responsable de la bande ν ou δ ;
c = concentration molaire de l'analyte ; et
e = épaisseur de l'échantillon.

Des polyisoprènes commerciaux (commercialisés sous les dénominations « IR305», « NATSYN 2200 » et « SKI-3S »), un polyisoprène synthétisé au laboratoire (MC78) et du caoutchouc naturel (NR) sont pris comme étalons. Comparés à iso-concentration (solutions), la loi peut donc s'écrire :

$$Dx = K\ X$$

avec :

Dx = valeur de l'intégration de la bande correspondant au motif X,
X = taux de motif X dans la gomme (déterminé par RMN$^{13}$C), et
K = constante d'étalonnage.

Les courbes d'étalonnage Dx = f(X) peuvent donc être tracées pour chacun des motifs.

**ANNEXE 2 :**

**Détermination de la distribution des masses moléculaires des élastomères obtenus par la technique de chromatographie d'exclusion par la taille (SEC).**

a) Principe de la mesure:

La chromatographie d'exclusion par la taille ou SEC (size exclusion chromatography) permet de séparer physiquement les macromolécules suivant leur taille à l'état gonflé sur des colonnes remplies de phase stationnaire poreuse. Les macromolécules sont séparées par leur volume hydrodynamique, les plus volumineuses étant éluées en premier.

Sans être une méthode absolue, la SEC permet d'appréhender la distribution des masses moléculaires d'un polymère. A partir de produits étalons commerciaux, les différentes masses moyennes en nombre (Mn) et en poids (Mw) peuvent être déterminées et l'indice de polydispersité calculé (Ip = Mw/Mn).

b) Préparation du polymère:

Il n'y a pas de traitement particulier de l'échantillon de polymère avant analyse. Celui-ci est simplement solubilisé dans du tétrahydrofurane à une concentration d'environ 1 g/l.

c) Analyse SEC:

L'appareillage utilisé est un chromatographe « WATERS, modèle 150C ». Le solvant d'élution est le tétrahydrofurane, le débit de 0,7 ml/mn, la température du système de 35˚C et la durée d'analyse de 90 min. On utilise un jeu de quatre colonnes en série, de dénominations commerciales « SHODEX KS807 », « WATERS type STYRAGEL HMW7 » et deux « WATERS STYRAGEL HMW6E ».

Le volume injecté de la solution de l'échantillon de polymère est 100 µl. Le détecteur est un réfractomètre différentiel « WATERS modèle RI32X » et le logiciel d'exploitation des données chromatographiques est le système « WATERS MILLENIUM » (version 3.00).

**Revendications**

1. Procédé de préparation d'un polyisoprène de synthèse présentant un taux d'enchaînements cis-1,4, mesuré selon la technique de résonance magnétique nucléaire du carbone 13 et selon la technique de dosage par moyen infrarouge conformément à l'Annexe 1, égal ou supérieur à 99,5 %, ledit procédé consistant à faire réagir un système catalytique en présence d'isoprène, **caractérisé en ce qu'**il consiste :

   • à utiliser, à titre de système catalytique, un système à base d'au moins :

      - un monomère diène conjugué,
      - un sel d'un ou plusieurs métaux de terre rare d'un acide phosphorique organique,
      - un agent d'alkylation constitué d'un alkylaluminium répondant à la formule $AlR_3$ ou $HAlR_2$, et
      - un donneur d'halogène constitué d'un halogénure d'alkylaluminium,

   ledit sel étant en suspension dans au moins un solvant hydrocarboné inerte, saturé et de type aliphatique ou alicyclique qui est compris dans ledit système catalytique, et le rapport molaire (agent d'alkylation / sel de terre rare) appartenant à un domaine allant de 1 à 5, et

   • à mettre en oeuvre la réaction de polymérisation de l'isoprène à une température inférieure à - 40 ˚C, dans un solvant de polymérisation hydrocarboné inerte ou en masse, pour que ledit polyisoprène présente un taux d'enchaînements cis-1,4, mesuré selon la technique de résonance magnétique nucléaire du carbone 13 et selon la technique de dosage par moyen infrarouge, qui soit égal ou supérieur à 99,5 %.

2. Procédé de préparation selon la revendication 1 d'un polyisoprène de synthèse, **caractérisé en ce que** ledit taux d'enchaînements cis-1,4, mesuré selon la technique de résonance magnétique nucléaire du carbone 13 et selon la technique de dosage par moyen infrarouge, est égal à 99,6 %.

3. Procédé de préparation selon la revendication 1 d'un polyisoprène de synthèse, **caractérisé en ce qu'**il consiste à mettre en oeuvre ladite réaction de polymérisation à une température allant de -55˚ C à -40˚ C, pour que ledit polyisoprène présente un taux d'enchaînements cis-1,4, mesuré selon la technique de résonance magnétique nucléaire du carbone 13 et selon la technique de dosage par moyen infrarouge, qui soit égal ou supérieur à 99,5 %.

4. Procédé de préparation d'un polyisoprène de synthèse selon une des revendications 1 à 3, **caractérisé en ce qu'**il consiste à utiliser, à titre de système catalytique, un système qui est tel que ledit sel de terre rare est un tris[bis (2-éthylhexyl)phosphate] de terre(s) rare(s).

5. Procédé de préparation d'un polyisoprène de synthèse selon la revendication 4, **caractérisé en ce qu'**il consiste à utiliser, à titre de système catalytique, un système qui est tel que ledit sel de terre rare est le tris[bis(2-éthylhexyl) phosphate] de néodyme.

6. Procédé de préparation d'un polyisoprène de synthèse selon une des revendications 1 à 5, **caractérisé en ce qu'**il consiste à utiliser, à titre de système catalytique, un système comprenant ledit ou lesdits métaux de terre rare selon une concentration égale à 0,02 mol/1.

7.  Procédé de préparation d'un polyisoprène de synthèse selon une des revendications 1 à 6, **caractérisé en ce qu'**il consiste à utiliser, à titre de système catalytique, un système qui est tel que le rapport molaire (donneur d'halogène/sel) appartient à un domaine allant de 2,6 à 3.

8.  Procédé de préparation d'un polyisoprène de synthèse selon une des revendications 1 à 7, **caractérisé en ce qu'**il consiste à utiliser, à titre de système catalytique, un système qui est tel que le rapport molaire (monomère diène conjugué/sel) appartient à un domaine allant de 25 à 50.

9.  Procédé de préparation d'un polyisoprène de synthèse selon une des revendications 1 à 8, **caractérisé en ce qu'**il consiste à utiliser, à titre de système catalytique, un système qui est tel que ledit monomère diène conjugué est le butadiène.

10. Procédé de préparation d'un polyisoprène de synthèse selon une des revendications 1 à 9, **caractérisé en ce qu'**il consiste à utiliser, à titre de système catalytique, un système qui est tel que ledit agent d'alkylation est l'hydrure de diisobutylaluminium.

11. Procédé de préparation d'un polyisoprène de synthèse selon une des revendications 1 à 10, **caractérisé en ce qu'**il consiste à utiliser, à titre de système catalytique, un système qui est tel que ledit ledit donneur d'halogène est le chlorure de diéthylaluminium.

12. Polyisoprène de synthèse, **caractérisé en ce que** ledit taux d'enchaînements cis-1,4, mesuré selon la technique de résonance magnétique nucléaire du carbone 13 et selon la technique de dosage par moyen infrarouge conformément à l'Annexe 1, est égal ou supérieur à 99,5 %.

13. Polyisoprène de synthèse selon la revendication 12, **caractérisé en ce que** ledit taux d'enchaînements cis-1,4, mesuré selon la technique de résonance magnétique nucléaire du carbone 13 et selon la technique de dosage par moyen infrarouge, conformément à l'Annexe 1, est égal à 99,6 %.

**Claims**

1.  A process for the preparation of a synthetic polyisoprene, **characterised in that** it has a content of cis-1,4 linkages, measured using the technique of carbon-13 nuclear magnetic resonance and the technique of medium-wave infrared radiation analysis according to Appendix 1, which is equal to or greater than 99.5 %, said process consisting essentially of reacting a catalytic system in the presence of isoprene, **characterised in that** it consists of:

    • using, as catalytic system, a system based on at least:

      - a conjugated diene monomer,
      - an organic phosphoric acid salt of one or more rare earth metals,
      - an alkylating agent consisting of an alkylaluminium of the formula $AlR_3$ or $HAlR_2$, and
      - a halogen donor consisting of an alkylaluminium halide,

    said salt being in suspension in at least one inert saturated hydrocarbon solvent of aliphatic or alicyclic type which is included in said catalytic system, and the molar ratio (alkylating agent / rare earth salt) being in a range from 1 to 5, and
    • implementing the polymerisation reaction of the isoprene at a temperature less than -40˚C, in an inert hydrocarbon polymerisation solvent or without a solvent, so that said polyisoprene has a content of cis-1,4 linkages, measured using the technique of carbon-13 nuclear magnetic resonance and using the technique of medium-wave infrared radiation analysis, which is strictly greater than 99.5%.

2.  A process according to Claim 1 for the preparation of a synthetic polyisoprene, **characterised in that** said content of cis-1,4 linkages, measured using the technique of carbon-13 nuclear magnetic resonance and the technique of medium-wave infrared radiation analysis, is equal to 99.6%.

3.  A process according to Claim 1 for the preparation of a synthetic polyisoprene, **characterised in that** it consists of carrying out said polymerisation reaction at a temperature from -55˚C to -20˚C, so that said polyisoprene has a content of cis-1,4 linkages, measured using the technique of carbon-13 nuclear magnetic resonance and using the technique of medium-wave infrared radiation analysis, which is equal to or greater than 99.5%.

4. A process for the preparation of a synthetic polyisoprene according to one of Claims 1 to 3, **characterised in that** it consists of using, as catalytic system, a system which is such that said rare earth salt is a rare earth tris[bis(2-ethylhexyl)phosphate].

5. A process for the preparation of a synthetic polyisoprene according to Claim 4, **characterised in that** it consists of using, as catalytic system, a system which is such that said rare earth salt is neodymium tris[bis(2-ethylhexyl) phosphate].

6. A process for the preparation of a synthetic polyisoprene according to one of Claims 1 to 5, **characterised in that** it consists of using, as catalytic system, a system comprising said rare earth metals in a concentration equal or substantially equal to 0.02 mol/l.

7. A process for the preparation of a synthetic polyisoprene according to one of Claims 1 to 6, **characterised in that** it consists of using, as catalytic system, a system which is such that the molar ratio (halogen donor / salt) lies within a range from 2.6 to 3.

8. A process for the preparation of a synthetic polyisoprene according to one of Claims 1 to 7, **characterised in that** it consists of using, as catalytic system, a system which is such that the molar ratio (conjugated diene monomer / salt) lies within a range from 25 to 50.

9. A process for the preparation of a synthetic polyisoprene according to one of Claims 1 to 8, **characterised in that** it consists of using, as catalytic system, a system which is such that said conjugated diene monomer is butadiene.

10. A process for the preparation of a synthetic polyisoprene according to one of Claims 1 to 9, **characterised in that** it consists of using, as catalytic system, a system which is such that said alkylating agent is diisobutylaluminium hydride.

11. A process for the preparation of a synthetic polyisoprene according to one of Claims 1 to 10, **characterised in that** it consists of using, as catalytic system, a system which is such that said halogen donor is diethylaluminium chloride.

12. A synthetic polyisoprene, **characterised in that** it has a content of cis-1,4 linkages, measured using the technique of carbon-13 nuclear magnetic resonance and the technique of medium-wave infrared radiation analysis according to Appendix 1, which is equal to or greater than 99.5 %.

13. A synthetic polyisoprene according to claim 12, **characterised in that** it has a content of cis-1,4 linkages, measured using the technique of carbon-13 nuclear magnetic resonance and the technique of medium-wave infrared radiation analysis according to Appendix 1, which is equal to or greater than 99.6 %.

**Patentansprüche**

1. Herstellungsverfahren für ein synthetisches Polyisopren, das einen Anteil von 99,5 % oder mehr an cis-1,4-Konfigurationen aufweist, gemessen mit der Technik der kernmagnetischen Resonanz des C-13 und mit der Technik der Bestimmung mittels Infrarot gemäß Anhang I, wobei das Verfahren darin besteht, ein katalytisches System in Gegenwart von Isopren reagieren zu lassen, **dadurch gekennzeichnet, dass** es aus Folgendem besteht:

■ als katalytisches System ein System zu verwenden, das mindestens auf Folgendem basiert:

- einem konjugierten Dien-Monomer,
- einem Salz einer organischen Phosphorsäure mit einem oder mehreren Seltenerdmetall(en)
- einem Alkylierungsmittel, das aus einem Alkylaluminium besteht, das der Formel $AlR_3$ oder $HAlR_2$ entspricht, und
- einem Halogendonator, der aus einem Alkylaluminiumhalogenid besteht,

wobei das Salz in mindestens einem inerten, gesättigten und aliphatischen oder alizyklischen Kohlenwasserstoff als Lösemittel suspendiert ist, der in dem katalytischen System enthalten ist, und das Molverhältnis (Alkylierungsmittel/Seltenerdsalz) im Bereich von 1 bis 5 liegt, und

■ die Polymerisierungsreaktion des Isoprens bei einer Temperatur unter -40˚C durchzuführen, in einem inerten Kohlenwasserstoff als Lösungsmittel oder in der Masse, damit das Polyisopren einen Anteil von 99,5 % oder mehr an cis-1,4-Konfigurationen aufweist, gemessen mit der Technik der kernmagnetischen Resonanz des C-13 und mit der Technik der Bestimmung mittels Infrarot.

2. Herstellungsverfahren nach Anspruch 1 für ein synthetisches Polyisopren, **dadurch gekennzeichnet, dass** der Anteil an cis-1,4-Konfigurationen, gemessen mit der Technik der kernmagnetischen Resonanz des C-13 und mit der Technik der Bestimmung mittels Infrarot, 99,6 % beträgt.

3. Herstellungsverfahren nach Anspruch 1 eines synthetischen Polyisoprens, **dadurch gekennzeichnet, dass** es darin besteht, die Polymerisierungsreaktion bei einer Temperatur zwischen -55˚C und -40 ˚C durchzuführen, damit das Polyisopren einen Anteil von 99,5 % oder mehr an cis-1,4-Konfigurationen aufweist, gemessen mit der Technik der kernmagnetischen Resonanz des C-13 und mit der Technik der Bestimmung mittels Infrarot.

4. Herstellungsverfahren für ein synthetisches Polyisopren nach einem der Ansprüche 1 bis 3, **dadurch gekennzeichnet, dass** es darin besteht, als katalytisches System ein System zu benutzen, das so ist, dass das Seltenerdsalz das Tri[bis(2-ethylhexyl)phosphat] von seltene(n) Erde(n) ist.

5. Herstellungsverfahren für ein synthetisches Polyisopren nach Anspruch 4, **dadurch gekennzeichnet, dass** es darin besteht, als katalytisches System ein System zu benutzen, das so ist, dass das Seltenerdsalz das Tri[bis(2-ethylhexyl)phosphat] von Neodym ist.

6. Herstellungsverfahren für ein synthetisches Polyisopren nach einem der Ansprüche 1 bis 5, **dadurch gekennzeichnet, dass** es darin besteht, als katalytisches System ein System zu benutzen, das das oder die Seltenerdmetalle in einer Konzentration von 0,02 mol/1 umfasst.

7. Herstellungsverfahren für ein synthetisches Polyisopren nach einem der Ansprüche 1 bis 6, **dadurch gekennzeichnet, dass** es darin besteht, als katalytisches System ein System zu benutzen, das so ist, dass das Molverhältnis (Halogendonator/Salz) im Bereich von 2,6 bis 3 liegt.

8. Herstellungsverfahren für ein synthetisches Polyisopren nach einem der Ansprüche 1 bis 7, **dadurch gekennzeichnet, dass** es darin besteht, als katalytisches System ein System zu benutzen, das so ist, dass das Molverhältnis (konjugiertes Dien-Monomer/Salz) im Bereich von 25 bis 50 liegt.

9. Herstellungsverfahren für ein synthetisches Polyisopren nach einem der Ansprüche 1 bis 8, **dadurch gekennzeichnet, dass** es darin besteht, als katalytisches System ein System zu benutzen, das so ist, dass das konjugierte Dien-Monomer Butadien ist.

10. Herstellungsverfahren für ein synthetisches Polyisopren nach einem der Ansprüche 1 bis 9, **dadurch gekennzeichnet, dass** es darin besteht, als katalytisches System ein System zu benutzen, das so ist, dass das Alkylierungsmittel Diisobutylaluminiumhydrid ist.

11. Herstellungsverfahren für ein synthetisches Polyisopren nach einem der Ansprüche 1 bis 10, **dadurch gekennzeichnet, dass** es darin besteht, als katalytisches System ein System zu benutzen, das so ist, dass der Halogendonator Diethylaluminiumchlorid ist.

12. Synthetisches Polyisopren, **dadurch gekennzeichnet, dass** der Anteil von cis-1,4-Konfigurationen, gemessen mit der Technik der kernmagnetischen Resonanz des C-13 und mit der Technik der Bestimmung mittels Infrarot gemäß Anhang I, 99,5% oder mehr beträgt.

13. Synthetisches Polyisopren nach Anspruch 12, **dadurch gekennzeichnet, dass** der Anteil von cis-1,4-Konfigurationen, gemessen mit der Technik der kernmagnetischen Resonanz des C-13 und mit der Technik der Bestimmung mittels Infrarot gemäß Anhang I, 99,6% beträgt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5859156 A

**Littérature non-brevet citée dans la description**

- **Y. B. MONAKOV ; Y. R. BIESHEV ; A. A. BERG ; S. R. RAFIKOV.** *Compte-rendu de l'Académie des Sciences d'U. R. S. S.,* 1977, vol. 234 (5
- **O. JUN ; W. FOSONG ; S. ZHIQUAN.** Proceedings of China - U. S. Bilateral Symposium on Polymer Chemistry and Physics. Science Press, 1981, 382-398
- **F. CIAMPELLI ; D. MORENO ; M. CAMBINI.** *Makromol. Chem.,* 1963, vol. 61, 250-253
- **Y. TANAKA ; Y. TAKEUCHI ; M. KOBAYASHI ; H. TADOKORO.** *Journal of Polymer Science,* 1971, vol. 9 (1), 43-57

- **J.P. KISTEL ; G. FRIEDMAN ; B. KAEMPF.** *Bulletin de la Société Chimique de France,* 1967, vol. 12
- **F. ASSSIOMA ; J. MARCHAL.** C. R. Acad. Sc. Paris. *Ser C,* 1968, vol. 266 (22), 1563-6
- *Ser D,* 1968, vol. 266 (6), 369-72
- **T.F. BANIGAN ; A.J. VERBISCAR ; T.A. ODA.** *Rubber Chemistry and technology,* 1982, vol. 55 (2), 407-15